# EUROPEAN PATENT APPLICATION

(11) **EP 4 822 864 A1**
(43) Date of publication of application: **14.10.2026**
(21) Application number: 26165326.5
(22) Date of filing: 17.03.2026
(51) Int. Cl.: H01M 50/367, H01M 10/613, H01M 10/625, H01M 10/6556, H01M 50/204, H01M 50/209

(54) **SMOKE DISCHARGE STRUCTURE**

(30) Priority: 26.03.2025 JP 2025052470
(71) Applicant: Toyota Jidosha Kabushiki Kaisha, Toyota-shi, Aichi-ken 471-8571 (JP)
(72) Inventor: KAWAMOTO, Naoya, Toyota-shi, Aichi-ken, 471-8571 (JP); TAKAHASHI, Isao, Toyota-shi, Aichi-ken, 471-8571 (JP)
(74) Representative: TBK

(57) **Abstract**

A smoke discharge structure includes plural storage battery modules each configured by plural storage battery cells arranged in a row, a channel member that configures a smoke discharge channel allowing a flow of smoke generated from the storage battery cells, a reinforcement member that extends in a row direction of the storage battery cells between the plural storage battery modules, and a cell pedestal configuring part of the smoke discharge channel and forming a closed profile between itself and the reinforcement member in a cross-section taken along a direction orthogonal to an extension direction of the reinforcement member.

## Description

### BACKGROUND

### Technical Field

The present disclosure relates to a smoke discharge structure.

### Related Art

Japanese Patent No. 7259673 describes a battery pack including a battery module including plural battery cells, a cooler that cools the battery cells, and a smoke discharge channel through which gas discharged from the battery cells flows.

For a smoke discharge channel allowing a flow of smoke generated from a battery pack, a wide channel cross-sectional area is preferably secured efficiently. For example, in the technology of Japanese Patent No. 7259673, at least part of a cooler is provided inside a smoke discharge channel, leaving room for improvement from the perspective of raising space efficiency.

### SUMMARY

A smoke discharge structure of a first aspect includes plural storage battery modules each configured by plural storage battery cells arranged in a row, a channel member that configures a smoke discharge channel allowing a flow of smoke generated from the storage battery cells, a reinforcement member that extends in a row direction of the storage battery cells between the plural storage battery modules, and a cell pedestal configuring part of the smoke discharge channel and forming a closed profile between itself and the reinforcement member in a cross-section taken along a direction orthogonal to an extension direction of the reinforcement member.

In the smoke discharge structure of the first aspect, the plural storage battery cells can be integrally configured by the storage battery modules. Smoke generated from the storage battery cells inflows to the smoke discharge channel configured by the channel member. The smoke inside the smoke discharge channel is, for example, discharged from a smoke discharge vent. Moreover, the smoke discharge structure is able to reinforce the storage battery modules in the row direction of the plural storage battery cells using the reinforcement member. Part of the smoke discharge channel can be configured by the reinforcement member and the cell pedestal between the plural storage battery modules, raising space efficiency.

A second aspect is the smoke discharge structure of the first aspect, wherein the cell pedestal extends so as to span plural of reinforcement members in an array direction of the plural storage battery modules.

In the smoke discharge structure of the second aspect, part of the smoke discharge channel can be configured by the cell pedestal made common for plural reinforcement members, enabling an increase in the number of components to be suppressed.

A third aspect is the smoke discharge structure of the second aspect, further including a lower case housing the storage battery modules and arranged below the plural storage battery modules, wherein part of the lower case configures the cell pedestal.

In the smoke discharge structure of the third aspect, a housed state of the plural storage battery modules can be maintained by the lower case. The lower case doubles as the cell pedestal, enabling an increase in the number of components to be suppressed.

A fourth aspect is the smoke discharge structure of any one of the first to third aspects, wherein the reinforcement member has a hat shaped profile open at a lower side in a cross-section in the direction orthogonal to the extension direction.

In the smoke discharge structure of the fourth aspect, rigidity can be secured due to the hat profiled reinforcement member. The space inside the reinforcement member can be utilized as the smoke discharge channel.

A fifth aspect is the smoke discharge structure of any one of the first to fourth aspects, wherein the reinforcement member extends over a range of the storage battery module in the storage battery cell row direction.

In the smoke discharge structure of the fifth aspect, the plural battery cells configuring each of the storage battery modules can be integrally reinforced by the reinforcement member.

A sixth aspect is the smoke discharge structure of any one of the first to fifth aspects, wherein the channel member includes a first channel member configuring a first smoke discharge channel that is part of the smoke discharge channel between itself and lower faces of the storage battery cells, and a second channel member that is disposed between the plural storage battery modules and configures a second smoke discharge channel using the reinforcement member and the cell pedestal to bypass part of the first smoke discharge channel.

In the smoke discharge structure of the sixth aspect, smoke generated from the storage battery cells inflows into the first smoke discharge channel configured by the first channel member. The smoke inside the first smoke discharge channel is, for example, discharged from a smoke discharge vent. This smoke discharge structure also includes the second channel member configuring the second smoke discharge channel. The second smoke discharge channel bypasses part of the first smoke discharge channel between the storage battery cells and a smoke discharge vent. An extensive channel cross-sectional area of the smoke discharge channel from the storage battery cells to the smoke discharge vent can accordingly be secured at locations configured by the second smoke discharge channel.

### BRIEF DESCRIPTION OF THE DRAWINGS

Exemplary embodiments of the present disclosure will be described in detail based on the following figures, wherein:
Fig. 1 is a plan view illustrating a smoke discharge structure of a first exemplary embodiment;
Fig. 2 is a perspective view illustrating a smoke discharge structure of a first exemplary embodiment together with a storage battery pack;
Fig. 3 is a perspective view illustrating a smoke discharge structure of the first exemplary embodiment;
Fig. 4 is a cross-section illustrating a smoke discharge structure of a first exemplary embodiment, sectioned along a vehicle front-rear direction;
Fig. 5 is a cross-section illustrating a smoke discharge structure of the first exemplary embodiment, sectioned along a vehicle width direction;
Fig. 6 is a cross-section illustrating an enlargement of a smoke discharge structure of the first exemplary embodiment, sectioned along the vehicle front-rear direction;
Fig. 7 is a cross-section illustrating an enlargement of a smoke discharge structure of the first exemplary embodiment, sectioned along the vehicle width direction;
Fig. 8 is a perspective view illustrating a vehicle rear section structure including a smoke discharge structure of a first exemplary embodiment;
Fig. 9 is a cross-section illustrating a vehicle rear section structure including a smoke discharge structure of the first exemplary embodiment, sectioned along a vehicle width direction; and

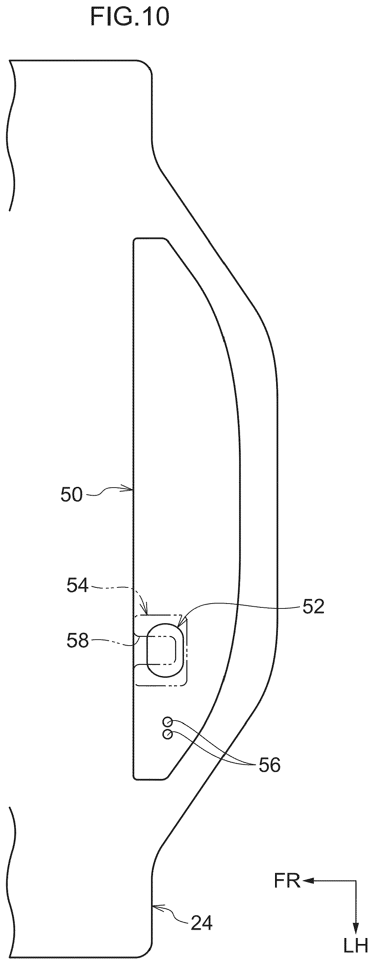

Fig. 10 is a plan view illustrating a vehicle rear section structure including a smoke discharge structure of the first exemplary embodiment.

### DETAILED DESCRIPTION

Description follows regarding a smoke discharge structure of a first exemplary embodiment of the present disclosure, with reference to the drawings. Note that description will mainly focus on areas needed to explain a scope of technology disclosed herein, and areas omitted from explanation are known technology. The same or similar reference numerals will be appended across the drawings to the same or equivalent members, and explanation thereof will be omitted. Furthermore, when plural of the same or equivalent members are included in the drawings, in order to enhance drawing clarity, sometimes reference numerals are only appended to some thereof. Arrow FR, arrow UP, and arrow LH in the drawings respectively indicate vehicle forward, vehicle upward, and vehicle leftward directions of a vehicle 10. When front and rear, up and down, and left and right directions are employed in the following description without particular explanation thereof, then these respectively indicate front and rear in the vehicle front-rear direction, up and down in the vehicle height direction, and left and right in the vehicle width direction (left-right direction).

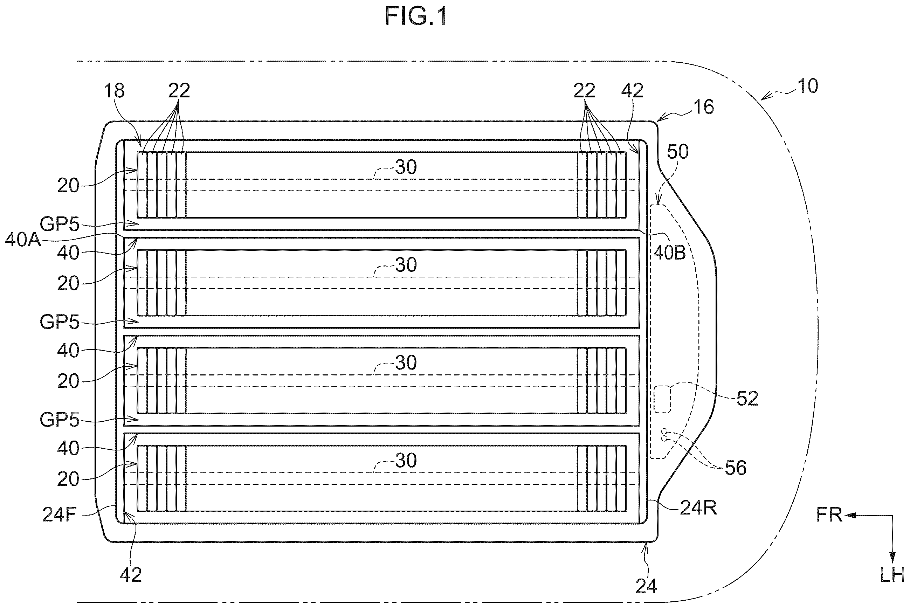

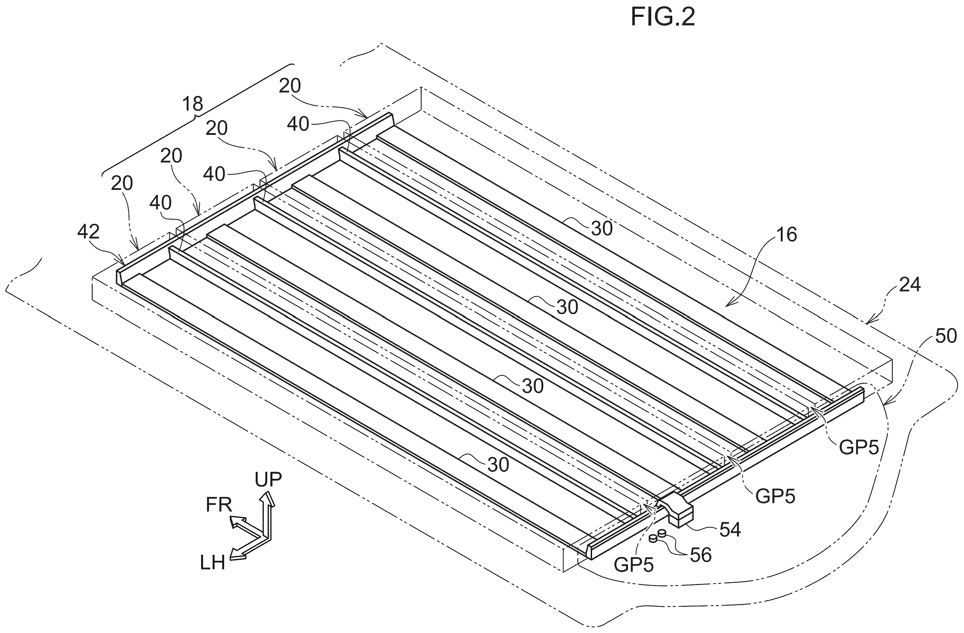

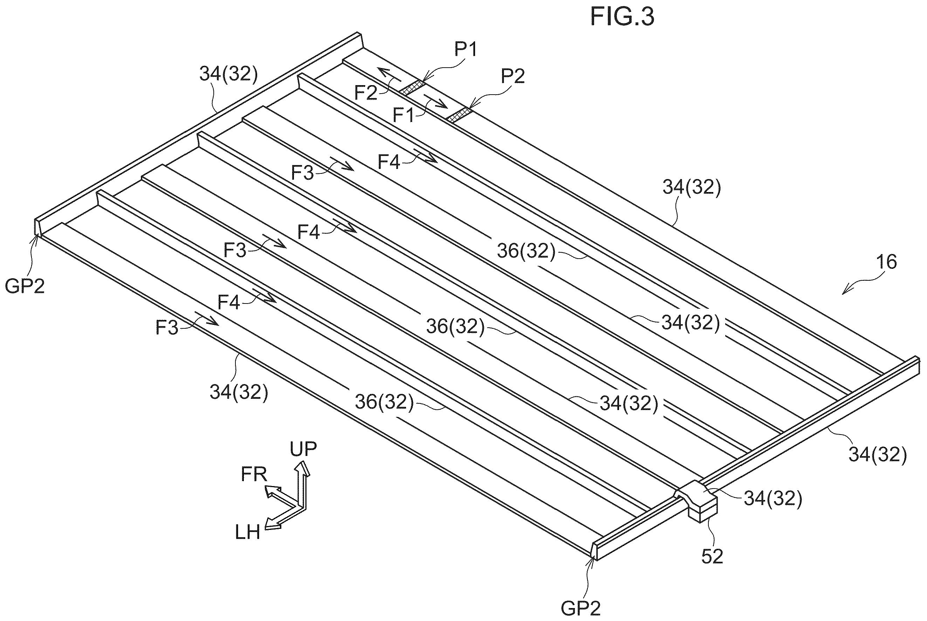

Fig. 1 is a schematic plan view illustrating parts of the vehicle 10 provided with a smoke discharge structure 16 of the first exemplary embodiment. Fig. 2 is a schematic perspective view illustrating a storage battery pack 18 and a smoke discharge structure 16 of the first exemplary embodiment. Fig. 3 is a perspective view illustrating a first smoke discharge channel 34 and a second smoke discharge channel 36 configuring the smoke discharge structure 16, as extracted from other configuration.

As illustrated in Fig. 1, the storage battery pack 18 is installed to the vehicle 10. The storage battery pack 18 includes, as illustrated in Fig. 2, plural (four in the present exemplary embodiment) storage battery modules 20. The plural storage battery modules 20 are arranged alongside each other in the vehicle width direction. Gaps GP5 are configured between the storage battery modules 20. There are four of the storage battery modules 20 in the present exemplary embodiment, and so this means that there are three of the gaps GP5 configured between the storage battery modules 20.

The storage battery modules 20 each include plural storage battery cells 22. The plural storage battery cells 22 are arranged in the storage battery modules 20 in a row along the vehicle front-rear direction. Namely, the storage battery pack 18 is configured by plural storage battery modules 20 arranged alongside each other in the vehicle width direction, with each of the storage battery modules 20 including plural storage battery cells 22 arranged in a row along the vehicle front-rear direction. The vehicle front-rear direction is an example of a first direction in the technology disclosed herein, and the vehicle width direction is similarly an example of a second direction in the technology disclosed herein.

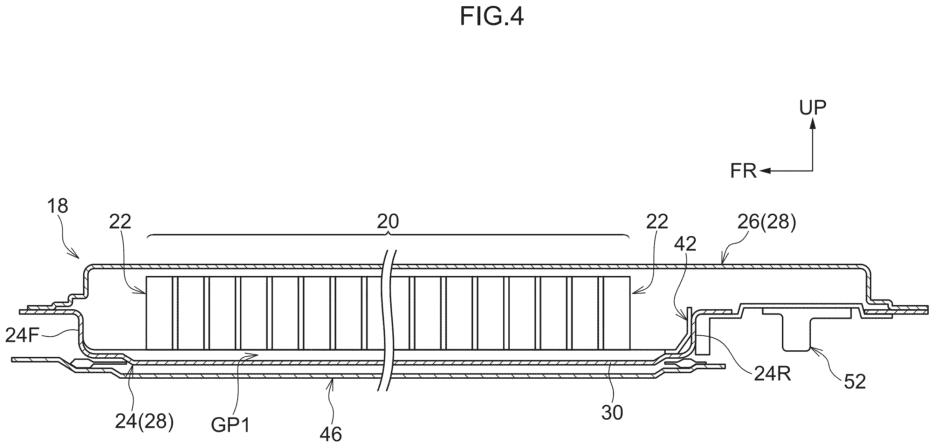

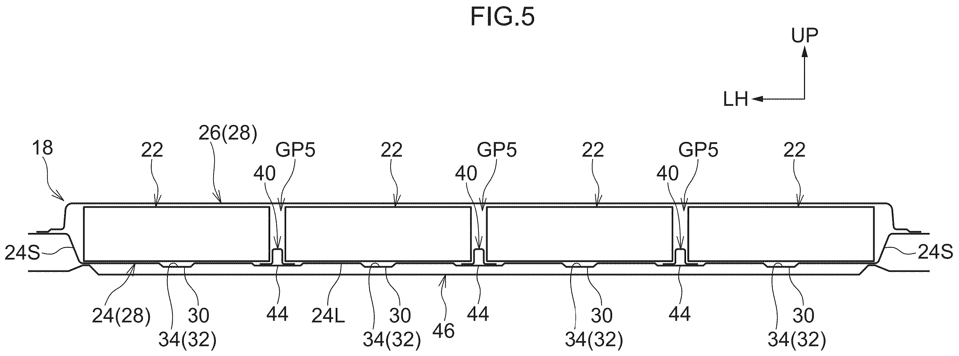

As illustrated in Fig. 4 and Fig. 5, the storage battery pack 18 includes a lower case 24 and an upper cover 26. The lower case 24 is a box-shaped member capable of housing the storage battery modules 20 and includes a lower plate 24L, a front plate 24F, a rear plate 24R, and a left-right pair of side plates 24S. The lower plate 24L is a plate-shaped region that supports the storage battery modules 20 from below. The front plate 24F and the rear plate 24R are each plate-shaped regions respectively provided so as to project upward from the front side and the rear side of the lower plate 24L. The side plates 24S are plate-shaped regions provided so as to project upward from the two vehicle width direction sides of the lower plate 24L. The upper face of the lower case 24 is open.

The upper cover 26 is a lid-shaped member for closing off the upper face of the lower case 24. A storage battery case 28 is configured by the lower case 24 and the upper cover 26, with a periphery of the lower case 24 and a periphery of the upper cover 26 joined together. The plural storage battery modules 20, each configured by the plural storage battery cells 22, are housed in the space inside the storage battery case 28 arranged alongside each other in the vehicle width direction.

A shared panel 46 is arranged at a lower side of the storage battery pack 18. In the present exemplary embodiment, the shared panel 46 covers the lower face of the storage battery pack 18, and protects the storage battery modules 20 from foreign objects and the like coming from the road surface.

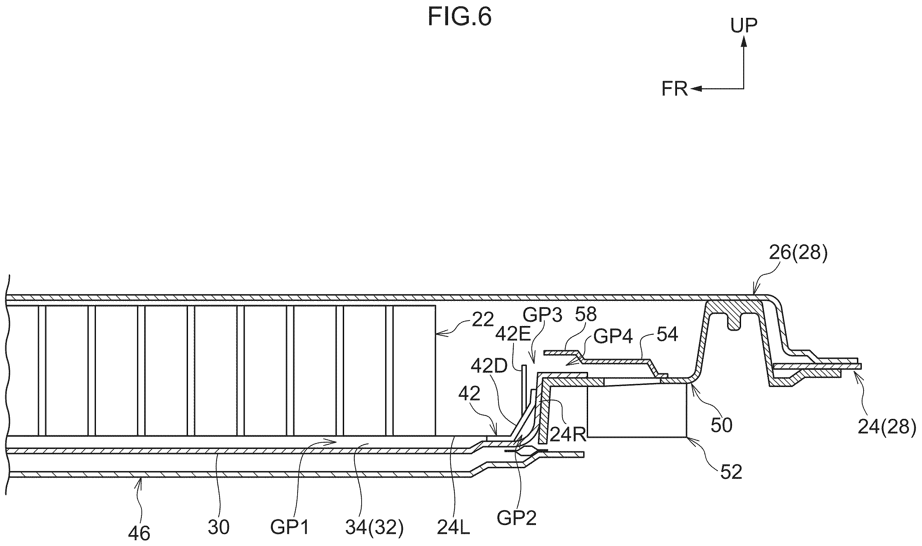

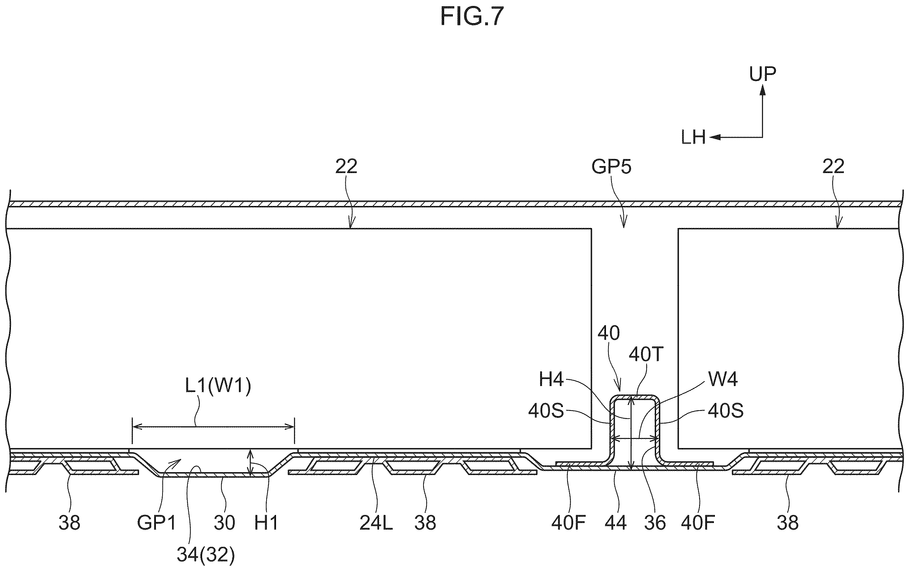

As illustrated in Fig. 6 and Fig. 7, the lower plate 24L of the lower case 24 is bonded to the lower face of each of the storage battery cells 22 using an adhesive. Plural downward protrusions 30 (the same number thereof as the number of storage battery modules 20) are formed to the lower plate 24L. The downward protrusions 30 each project downward at a vehicle width direction central position of the respective storage battery module 20. A gap GP1 is configured at each of the downward protrusions 30 where the lower case 24 is locally separated from the lower face of the storage battery cells 22. The downward protrusions 30 are formed at each of the storage battery modules 20 so as to extend along the vehicle front-rear direction, namely along the storage battery cell 22 row direction. A vehicle front-rear direction length of the downward protrusions 30 is about the same as the vehicle front-rear direction length of the storage battery modules 20, and the downward protrusions 30 extend contiguously along the vehicle front-rear direction from a vicinity of the front plate 24F to a vicinity of the rear plate 24R.

Part of the first smoke discharge channel 34 is configured by the gaps GP1 resulting from the downward protrusions 30 being separated from the lower faces of the storage battery cells 22 in this manner. Configuration is such that, in cases in which gas containing smoke (hereafter such gas is simply referred to as "smoke") has been generated in the storage battery cells 22 due to some reason or other, such smoke is discharged from a vehicle width direction central position on the lower faces of the storage battery cells 22. This means that the smoke generated by the storage battery cells 22 inflows into the gaps GP1 configured by the downward protrusions 30. The lower case 24 formed with the downward protrusions 30 is an example of a first channel member configuring the first smoke discharge channel 34.

As illustrated in Fig. 7, coolers 38 are provided to the lower case 24. The coolers 38 configure coolant channels extending along the vehicle front-rear direction on the lower face of the lower case 24, at the two vehicle width direction sides of the respective downward protrusions 30. The heat of the coolers 38 is transmitted to coolant flowing in the coolant channels, enabling the storage battery cells 22 to be cooled.

As illustrated in Fig. 7, the downward protrusions 30 have a flattened trapezoidal profile with an upper base longer than a lower base when viewed in lateral direction (vehicle width direction) cross-section orthogonal to the extension direction thereof. A height H1 of the trapezoidal profile is lower than a length L1 of the upper base. The length L1 of the upper base of the trapezoidal profile is essentially a width W1 of the downward protrusions 30. This means that the downward protrusions 30 have a trapezoidal profile having a low profile in which the height H1 is lower than the width W1, in other words, have a trapezoidal profile short in the lateral direction (vehicle width direction dimension) orthogonal to the extension direction thereof.

As illustrated in Fig. 1, Fig. 2, Fig. 5, and Fig. 7, the reinforcement members 40 are arranged in the respective gaps GP5 between the storage battery modules 20. As illustrated in Fig. 7, when viewed in a vehicle width direction cross-section, the reinforcement members 40 include an upper plate 40T, side plates 40S, and flange plates 40F. The upper plate 40T is a plate shaped region forming an upper portion of the reinforcement member 40. The side plates 40S extend respectively downward from the two vehicle width direction sides of the upper plate 40T, and are plate-shaped regions provided as a pair separated from each other in the vehicle width direction. The flange plates 40F are flanges extending outward from the respective side plates 40S in the vehicle width direction. The reinforcement members 40 are each accordingly configured with a substantially hat shaped cross-section profile opening downward.

As illustrated in Fig. 1, the reinforcement members 40 each have a length that reaches the vicinities of the front plate 24F and the rear plate 24R of the lower case 24. This means that the reinforcement members 40 extend in the vehicle front-rear direction over the range of the storage battery modules 20. Length direction front ends 40A and rear ends 40B of the reinforcement members 40 are open. The front end 40A (see Fig. 1) of each of the reinforcement members 40 and the rear end 40B thereof are joined to the front plate 24F and the rear plate 24R of the lower case 24 by respective joining members 42. The reinforcement members 40 thereby reinforce the storage battery pack 18. The reinforcement members 40 are rod shaped members extending in the vehicle front-rear direction. The reinforcement members 40 are also reinforcement bars.

As illustrated in Fig. 6, first separation sections 42D are formed to the joining members 42. The first separation sections 42D are formed inclined when viewed in vehicle front-rear direction cross-section, and gaps GP2 are formed between the first separation sections 42D and the lower case 24. The gaps GP2 are each contiguous in the vehicle width direction, and form part of the first smoke discharge channel 34 of a smoke discharge channel 32. The joining members 42 are rod shaped members extending in the vehicle width direction. The joining members 42 are also joining bars.

As illustrated in Fig. 7, cell pedestals 44 are formed to the lower plate 24L of the lower case 24 at positions corresponding to the reinforcement members 40. The cell pedestals 44 are each a region where the lower plate 24L of the lower case 24 is formed as a downward protrusion at a position corresponding to the reinforcement member 40. The cell pedestals 44 are joined to the flange plates 40F of the reinforcement members 40, and close off opening sections at the lower side of the reinforcement members 40. In contrast thereto, the front ends 40A and the rear ends 40B of the reinforcement members 40 are open (see Fig. 1) and are in communication with the gaps GP2. Namely, a section of closed cross-section profile (a closed profile in vehicle width direction cross-section) configured by the reinforcement member 40 and the cell pedestals 44 are in communication with the first smoke discharge channel 34 configured by the gaps GP2. The closed cross-section profiles configured by the reinforcement members 40 and the cell pedestals 44 accordingly form part of the second smoke discharge channel 36. Namely, the reinforcement members 40 and the cell pedestals 44 are an example of a second channel member. In the present exemplary embodiment, parts of the lower case 24 also double as the cell pedestals 44. In other words, the lower case 24 that doubles as the cell pedestals 44 is a structure that extends so as to span plural of the reinforcement members 40. In other words, the cell pedestals 44 are integrally provided by the lower case 24 for plural of the reinforcement members 40 and configure the first smoke discharge channel 34.

As illustrated in Fig. 7, the reinforcement member 40 has a high profile in which its height H4 is greater than its width W4. This means that the second smoke discharge channel 36 also has a rectangular profile in cross-section taken a direction orthogonal to the extension direction, with the height direction being the long side direction thereof. In particular, the height H4 of the reinforcement members 40 is higher than the height H1 of the downward protrusions 30. Moreover, the width W4 of the reinforcement member 40 is narrower than the width W1 of the downward protrusions 30. A ratio of the height H4 to the width W4 for the reinforcement members 40 is nearer to 1 than a ratio of the cross-sectional height H1 to the width W1 for the downward protrusions 30. In other words, a section of the second smoke discharge channel 36 configured by the reinforcement members 40 has a cross-section profile that is closer to a square than a section of the first smoke discharge channel 34 configured by the downward protrusions 30.

As described above, the section of the first smoke discharge channel 34 configured by the downward protrusions 30 is a trapezoidal profile short in the height direction. Namely, the first smoke discharge channel 34 and the second smoke discharge channel 36 have different profiles in cross-section orthogonal to the length directions thereof.

As illustrated in Fig. 1, a connector block 50 is arranged at a vehicle rear side of the lower case 24. The connector block 50 is an example of a retaining member.

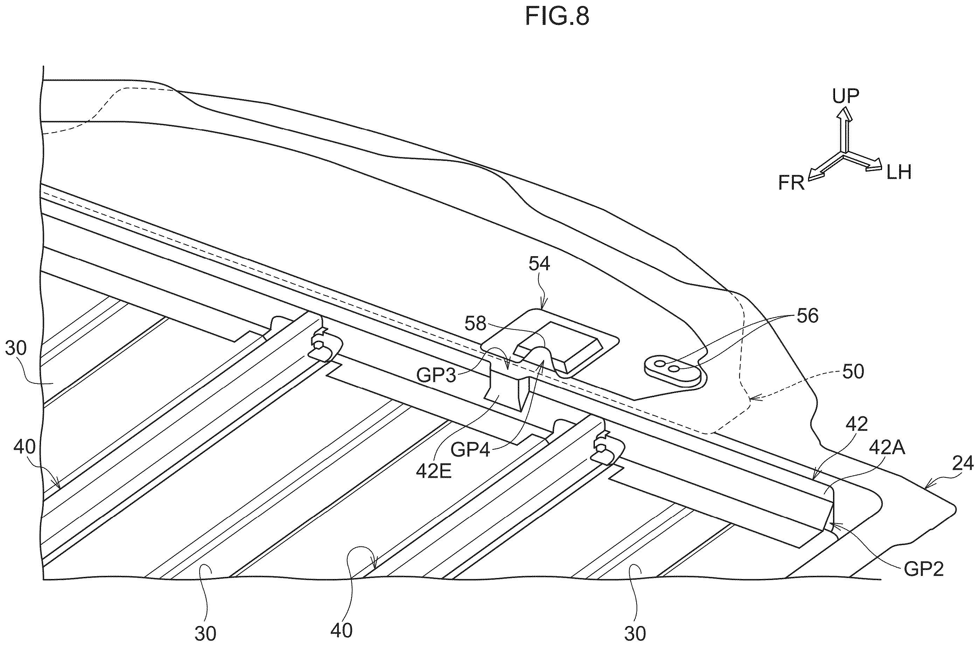

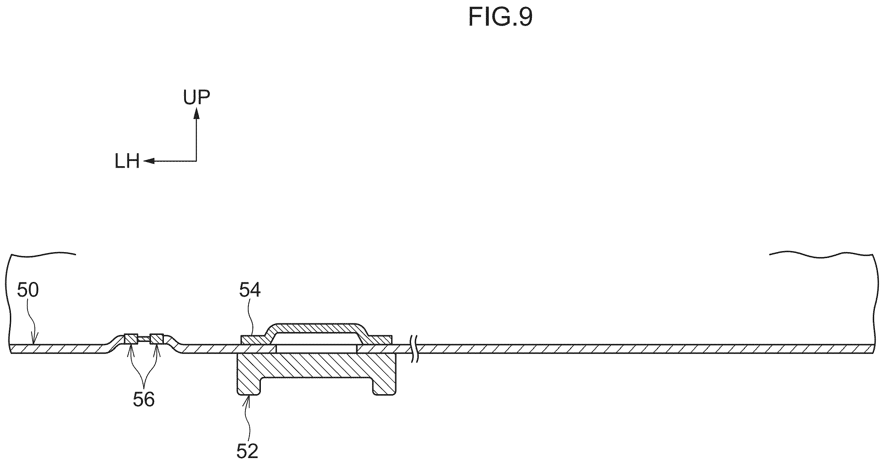

As illustrated in Fig. 8 and Fig. 9, a smoke discharge vent 52 is attached to the connector block 50. A cover plate 54 (see Fig. 2) is attached to the connector block 50 and spans from the storage battery pack 18 across the smoke discharge vent 52 so as to configure part of the first smoke discharge channel 34 between itself and the connector block 50.

As illustrated in Fig. 6, an upward protrusion 58 is formed to the cover plate 54. The upward protrusion 58 has a profile in which a vehicle width direction central portion thereof is curved upward in the vicinity of the vehicle front side. A gap GP4 is configured between the cover plate 54 and the lower case 24 due to forming the upward protrusion 58. The gap GP4 enables smoke to move in the vehicle front-rear direction, and forms part of the first smoke discharge channel 34.

A second separation portion 42E is provided to the joining member 42 arranged at the vehicle rear side from out of the two joining members 42. The second separation portion 42E is formed at a position in the vehicle width direction corresponding to the upward protrusion 58. As illustrated in Fig. 8, a gap GP3 is configured between the second separation portion 42E and the rear plate 24R of the lower case 24. This means that the first smoke discharge channel 34 inside the storage battery pack 18 is formed so as to be contiguous from the gaps GP1 between the downward protrusions 30 and the lower faces of the storage battery cells 22, to the smoke discharge vent 52, via the gaps GP2 and gaps GP3 between the joining members 42 and the lower case 24, and via the gap GP4 between the cover plate 54 and the lower case 24. The second smoke discharge channel 36 configured by the reinforcement members 40 and the cell pedestals 44 is in communication with the first smoke discharge channel 34 at the gaps GP3 at the vehicle front side and rear side. As illustrated in Fig. 3, the smoke discharge channel 32 is configured including the first smoke discharge channel 34 and the second smoke discharge channel 36, with part of the first smoke discharge channel 34 being bypassed by the second smoke discharge channel 36.

The smoke discharge vent 52 is configured so as to perform valve-opening when the internal pressure of the first smoke discharge channel 34 is at least a specific value higher than the externally air pressure of the first smoke discharge channel 34. Namely, the smoke discharge vent 52 performs valve-opening when the internal pressure from smoke inflow into the first smoke discharge channel 34 has risen to the specific value or higher, and internal gas of the first smoke discharge channel 34 is discharged externally.

Furthermore, a membrane member 56 is also attached to the connector block 50. The membrane member 56 is configured to as to prevent passage of liquids (including vapor) while allowing gases to pass through. Moreover, the membrane member 56 is formed such that in cases in which gas passes therethrough, due to the membrane member 56 acting as a resistance to gas movement, such gas does not move all at once over a short period of time.

Next, description follows regarding the operation of the present exemplary embodiment.

In the vehicle 10 applied with the smoke discharge structure 16 of the present exemplary embodiment, the storage battery modules 20 are each configured from the plural storage battery cells 22. Namely, the plural storage battery cells 22 can be integrally configured by the storage battery modules 20.

The storage battery cells 22 are arranged in a row along the first direction (the vehicle front-rear direction) in each of the storage battery modules 20, and the storage battery modules 20 are arranged in a row along the second direction (the vehicle width direction). This thereby enables the plural storage battery cells 22 to be arranged efficiently in the first direction and the second direction. In particular, due to the array direction of the storage battery cells 22 in the storage battery modules 20 being the vehicle front-rear direction, the number of the storage battery cells 22 that can be placed in a single row is increased in comparison to configurations in which the storage battery cells 22 are arrayed in the vehicle width direction.

Although smoke is not generated in a normal state of the storage battery cells 22, in cases in which smoke has been generated for some reason or other, the smoke is discharged from a vehicle width direction central position on the lower face of the storage battery cells 22. The smoke then flows out to the first smoke discharge channel 34 configured by the gaps GP1 between the downward protrusions 30 of the lower case 24 and the lower face of the storage battery cell 22. Furthermore, the smoke flows to the smoke discharge vent 52 via the first smoke discharge channel 34 configured by the gap GP2, the first smoke discharge channel 34 configured by the gaps GP3, and the first smoke discharge channel 34 configured by the gaps GP4. This smoke is then discharged from the smoke discharge vent 52 when the internal pressure of the first smoke discharge channel 34 is higher than the external pressure.

Moreover, the smoke discharge structure 16 of the present exemplary embodiment includes the membrane member 56. The membrane member 56 allows movement of gas with respect to the smoke discharge channel 32, and prevents the movement of liquids. For example, in cases in which the vehicle 10 has travelled to a location where the external pressure is different (for example a region at high altitude), a pressure difference between the internal pressure of the first smoke discharge channel 34 and the external pressure becomes greater. The pressure difference in such cases can be alleviated by the membrane member 56 allowing the passage of air.

The smoke discharge structure 16 of the present exemplary embodiment includes the second smoke discharge channel 36 in addition to the first smoke discharge channel 34. The second smoke discharge channel 36 bypasses part of the first smoke discharge channel 34 between the storage battery cell 22 and the smoke discharge vent 52. At the location where the second smoke discharge channel 36 is provided, a more extensive cross-sectional area can be secured for the channel allowing the smoke flow than configurations that lack the second smoke discharge channel 36.

Moreover, due to the provision of the second smoke discharge channel 36 that bypasses part of the first smoke discharge channel 34, a configuration can be achieved in which movement of smoke to the smoke discharge vent 52 is relatively unaffected even in cases in which the first smoke discharge channel 34 has been blocked by foreign matter. Consider, for example as illustrated in Fig. 3, cases in which smoke has been generated at a smoke generation location P1. In such cases, in the first smoke discharge channel 34 at the vicinity of the smoke generation location P1, a smoke flow occurs as indicated by arrow F1, and a smoke flow occurs as indicated by arrow F2. In particular, a flow path of the smoke indicated by arrow F1 has a shorter distance to the smoke discharge vent 52 and a lower flow path resistance, and so smoke flows more easily therein. However, for example, were the first smoke discharge channel 34 to become blocked at blockage location P2, then the flow indicated by arrow F1 would no longer occur. However, even in such cases, a smoke flow would occur as indicated by arrow F2 at locations in the first smoke discharge channel 34 that are not blocked, and from thereon the smoke is able to reach the smoke discharge vent 52 as indicted by arrows F3, F4. Moreover, in the present exemplary embodiment, in addition to the smoke flows as indicated by arrows F3, smoke also flows as indicated by arrows F4 due to the presence of the second smoke discharge channel 36. The effective cross-sectional area of the flow path is extensive, and so this results in a structure in which smoke flows easily from the smoke generation location P1 to the smoke discharge vent 52. Note that although an example has been given above of a case in which the blockage location P2 has occurred on the first smoke discharge channel 34, the presence of the second smoke discharge channel 36 also provides an advantageous effect of being able to achieve an extensive effective channel cross-sectional area and to secure a larger channel capacity even in cases in which the blockage location P2 has not occurred.

In the smoke discharge structure 16 of the present exemplary embodiment, the first smoke discharge channel 34 and the second smoke discharge channel 36 have different cross-section profiles in directions orthogonal to the extension directions thereof. This means that the ease with which foreign matter contained in smoke pass through is different for the first smoke discharge channel 34 and the second smoke discharge channel 36. For example, even in cases in which discharged foreign matter is easily trapped in the first smoke discharge channel 34, this foreign object is sometimes less liable to become trapped in the second smoke discharge channel 36. In the inverse scenario, foreign matter that is easily trapped in the second smoke discharge channel 36 is sometimes less liable to become trapped in the first smoke discharge channel 34. Due to having the first smoke discharge channel 34 and the second smoke discharge channel 36 of different cross-section profiles, a state can be realized in which, even if foreign matter has been discharged, it is unlikely that the flow of smoke becomes isolated due to trapped foreign matter in at least one out of the first smoke discharge channel 34 or the second smoke discharge channel 36.

Specifically, the height H4 of the reinforcement members 40 in the second smoke discharge channel 36 is higher than the height H1 of the downward protrusions 30 in the first smoke discharge channel 34. This means that a structure is realized in which foreign matter is less liable to be trapped in the second smoke discharge channel 36 of higher height than in the first smoke discharge channel 34 having a relatively low height. Moreover, due to securing height in the second smoke discharge channel 36, a channel cross-sectional area for smoke flow can be secured even in cases in which the spacing between the storage battery modules 20 is narrow. Moreover, compared to the second smoke discharge channel 36, the first smoke discharge channel 34 has a flatter profile that is long in the vehicle width direction in cross-section taken in a direction orthogonal to the extension direction. This means that the channel cross-sectional area for smoke flow can be secured with a lower height in the first smoke discharge channel 34.

Moreover, the second smoke discharge channel 36 has a cross-section profile that is closer to a square profile than the first smoke discharge channel 34. The second smoke discharge channel 36 can be said to be less likely to trap foreign matter than the first smoke discharge channel 34 due to having such a cross-section profile that is closer to a square profile.

The second smoke discharge channel 36 is positioned further upward than the lower faces of the storage battery cells 22. This means that the second smoke discharge channel 36 is less liable to be contacted by foreign objects, such as from the road surface, than configurations in which the second smoke discharge channel 36 is positioned below the lower face of the storage battery cells 22, enabling damage to the second smoke discharge channel 36 from contact with foreign objects to be suppressed.

The reinforcement members 40 are arranged between the storage battery modules 20. This thereby enables the second smoke discharge channel 36 to be arranged by efficiently utilizing the spaces between the storage battery modules 20. In particular, the opening sections at the lower side of the reinforcement members 40 are closed off by the cell pedestals 44, enabling the second smoke discharge channel 36 to be configured using the spaces inside the reinforcement members 40, achieving high space efficiency from this perspective too. Leakage of smoke from the second smoke discharge channel 36 can be suppressed due to the cell pedestals 44 reliably closing off the lower side of the reinforcement members 40.

The reinforcement members 40 extend in the vehicle front-rear direction so as to span the range of the storage battery modules 20. This thereby enables the storage battery modules 20, which each have the plural storage battery cells 22 arranged in a row, to be reinforced in the storage battery cell 22 row direction.

The reinforcement members 40 have a hat shape in vehicle width direction cross-section profile enabling rigidity (bending rigidity) to be better secured than, for example, flat plate shaped members. The reinforcement members 40 also double as the second channel member. Namely, the second channel member can be configured by efficiently utilizing the space inside the reinforcement members 40, and so there is no need for a new member to provide the second channel member, enabling an increase in the number of components to be suppressed.

The smoke discharge structure 16 includes the coolers 38. The storage battery cells 22 can be cooled by the coolers 38. The coolers 38 are provided externally to the first smoke discharge channel 34 and the second smoke discharge channel 36, and so the channel cross-sectional area of the first smoke discharge channel 34 and the second smoke discharge channel 36 is not narrowed by the coolers 38, in contrast to configurations in which the coolers 38 are provided either inside the first smoke discharge channel 34 or inside the second smoke discharge channel 36.

In the smoke discharge structure 16 of the present exemplary embodiment, the second smoke discharge channel 36 is configured by the reinforcement members 40 and the cell pedestals 44. The cell pedestals 44 are configured by part of the lower case 24. The lower case 24 doubles as the cell pedestals 44, thereby enabling an increase in the number of components to be suppressed compared to configurations in which the cell pedestals 44 are provided separately to the lower case 24.

Moreover, the cell pedestals 44 are formed to the lower case 24 so as to correspond to the respective reinforcement members 40, and so cell pedestals 44 can be configured using the common lower case 24 for plural of the reinforcement members 40, enabling an increase in the number of components to be suppressed.

The cell pedestals 44 close off the lower side of the reinforcement members 40, enabling leakage of smoke from the second smoke discharge channel 36 configured by the reinforcement members 40 and the cell pedestals 44 to be suppressed.

In the smoke discharge structure 16 of the present exemplary embodiment, the reinforcement members 40 are arranged in the gaps GP5 between the plural storage battery modules 20. The front ends 40A and the rear ends 40B of the reinforcement members 40 are respectively joined to the lower case 24 by the joining members 42. This thereby enables the storage battery case 28 to be reinforced using the reinforcement member 40. In particular, the extension direction of the reinforcement member 40 is the vehicle front-rear direction (second direction), i.e. the storage battery cells 22 row direction in the storage battery modules 20. This thereby enables the storage battery case 28 to be reinforced by the reinforcement members 40 in the storage battery cell 22 row direction.

The openings of the front ends 40A and the rear ends 40B of the reinforcement members 40 are in communication with the gaps GP2 (part of the first smoke discharge channel 34) configured between the lower case 24 and the respective joining members 42. This means that smoke that has inflowed into the first smoke discharge channel 34 also flows into the interior of the reinforcement members 40. The spaces surrounded by the reinforcement members 40 and the cell pedestals 44 are utilized as part of the smoke discharge channel 32. Namely, the interior of the reinforcement member 40 can be efficiently utilized as the second smoke discharge channel 36.

The joining members 42 extend in the vehicle width direction (second direction). This means that the front ends 40A and the rear ends 40B of the reinforcement members 40 can be joined to the lower case 24 over a given range in the vehicle width direction.

Moreover, due to the joining members 42 being extended in the vehicle width direction, the respective front ends 40A and rear ends 40B of plural of the reinforcement members 40 are joined to the lower case 24 by the joining members 42. This means a smaller number of the joining members 42 is sufficient compared to structures in which joining members 42 are employed individually to join the plural reinforcement members 40 to the lower case 24, enabling an increase in the number of components to be suppressed.

The storage battery modules 20 are housed in the lower case 24, and the storage battery module 20 includes plural of the storage battery cells 22. Namely, a state can be maintained in which the plural storage battery cells 22 are integrally housed by the lower case 24. The lower case 24 configures part of the first channel member, enabling the number of components to be suppressed compared to configurations in which a first channel member is provided as a separated body to the lower case 24.

An object of the present disclosure is to arrange a smoke discharge channel allowing a flow of smoke generated from storage battery cells with high space efficiency.

The present disclosure enables a smoke discharge channel allowing a flow of smoke generated from storage battery cells to be arranged with high space efficiency.

## Claims

1. A smoke discharge structure (16) comprising:
a plurality of storage battery modules (20) each configured by a plurality of storage battery cells arranged in a row;
a channel member (24,40,44) that configures a smoke discharge channel allowing a flow of smoke generated from the storage battery cells;
a reinforcement member (40) that extends in a row direction of the storage battery cells between the plurality of storage battery modules; and
a cell pedestal (44) configuring part of the smoke discharge channel and forming a closed profile between itself and the reinforcement member in a cross-section taken along a direction orthogonal to an extension direction of the reinforcement member.

2. The smoke discharge structure of claim 1, wherein the cell pedestal extends so as to span a plurality of reinforcement members in an array direction of the plurality of storage battery modules.

3. The smoke discharge structure of claim 2, further comprising:
a lower case (24) housing the storage battery modules and arranged below the plurality of storage battery modules,
wherein part of the lower case configures the cell pedestal.

4. The smoke discharge structure of claim 1, wherein the reinforcement member has a hat shaped profile open at a lower side in a cross-section in the direction orthogonal to the extension direction.

5. The smoke discharge structure of claim 1, wherein the reinforcement member extends over a range of the storage battery modules in the storage battery cell row direction.

6. The smoke discharge structure of claim 1, wherein the channel member includes:
a first channel member (24,40,44) configuring a first smoke discharge channel that is part of the smoke discharge channel between itself and lower faces of the storage battery cells; and
a second channel member (40), that is disposed between the plurality of storage battery modules and configures a second smoke discharge channel using the reinforcement member and the cell pedestal to bypass part of the first smoke discharge channel.
